# FASCICULE DE BREVET EUROPEEN

(11) **EP 4 075 037 B1**
(45) Date de publication et mention de la délivrance du brevet: **22.01.2025**
(21) Numéro de dépôt: 22164754.8
(22) Date de dépôt: 28.03.2022
(51) Int. Cl.: F16L 9/08, F16L 9/14

(54) **CONDUITE POUR LE TRANSPORT DE FLUIDE SOUS PRESSION EN BETON FIBRE ULTRA HAUTE PERFORMANCE**
LEITUNG AUS ULTRAHOCHLEISTUNGS-FASERBETON FÜR DEN TRANSPORT VON DRUCKFLÜSSIGKEITEN
PIPE FOR TRANSPORTING PRESSURISED FLUID MADE OF ULTRA HIGH-PERFORMANCE FIBRE-REINFORCED CONCRETE

(30) Priorité: 14.04.2021 FR 2103859
(43) Date de publication de la demande: 19.10.2022
(73) Titulaire: IFP Energies nouvelles, 92500 Rueil-Malmaison (FR)
(72) Inventeur: ESNAULT, Vivien, 92852 Rueil-Malmaison Cedex (FR)
(74) Mandataire: IFP Energies nouvelles

(56) Documents cités:
- CN-A- 106 247 030
- CN-A- 106 287 008
- CN-A- 111 216 232
- CN-A- 111 473 167

## Description

### Domaine technique

La présente invention concerne le domaine du transport de fluide sous pression, notamment de gaz et plus particulièrement le dioxyde de carbone CO₂ à des fins de stockage pour la séquestration, ou de réutilisation pour l'augmentation du taux de récupération des puits de production de pétrole et gaz (EOR).

### Technique antérieure

Généralement, pour transporter un fluide sur de longues distances, des conduites sont utilisées : on parle alors de conduite de transport de fluide sous pression.

Le transport de l'eau potable se fait généralement à basse pression (pression comprise entre 18 et 30 bar) dans des conduites métalliques ou en PVC (polychlorure de vinyle). Des conduites en béton précontraint sont également utilisées. Toutefois, l'utilisation de béton précontraint est limitée à ces applications basse pression en raison principalement du risque de rupture, le béton ordinaire n'étant pas un matériau ductile.

Le transport de fluide, gaz ou liquide, à une pression supérieure à 15 bar (1,5 MPa), se fait généralement par des conduites métalliques, afin de se prémunir de risque de rupture. Ces conduites métalliques sont choisies dans un matériau qui présente un comportement ductile, permettant de limiter le risque d'explosion intrinsèque au comportement du matériau et de permettre un suivi en service par l'étude/le contrôle des fissures.

Un comportement ductile s'entend d'un matériau qui a la capacité à pouvoir se déformer plastiquement (de manière permanente) sans se rompre brutalement. Par opposition, on parle de comportement fragile lorsque le matériau peut rompre brutalement, comme c'est le cas du béton ordinaire notamment.

Plus particulièrement, le transport du CO₂ a été largement développé par les Etats-Unis depuis les années 70, pour d'une part, valoriser ce gaz néfaste pour l'environnement et, d'autre part, pour augmenter le taux de récupération des puits de production de pétrole (Technique EOR Enhanced Oil Recovery).

En 2016, le réseau de transport de CO₂ atteignait pas moins de 6000 kms en Amérique du nord, pour un débit total de l'ordre 50 Mt/an.

Lors de la construction d'un nouveau réseau, le débit du gaz, en fonction du site de production avec capture et de l'usage qui en est fait, est en moyenne de 150 kg/s, pour une longueur variant entre 90 et 900 km. Le CO₂ est conditionné préférentiellement à l'état supercritique afin de maximiser le débit et d'optimiser les coûts d'investissement et de transport. Le point critique du CO₂ pur étant 73.8 bar pour une température de 31.06 °C, la pression de transport est généralement comprise entre 100 et 150 bar et la température conservée à la température ambiante (entre 13 °C et 44 °C). Pour faciliter le contrôle de la température et limiter les risques de rupture des conduites sous l'effet de la corrosion ou d'endommagement par une agression mécanique extérieure, le réseau est le plus souvent enterré et éloigné des zones d'habitation. Le CO₂ est un gaz réactif. Dissous dans de l'eau, il peut conduire à une corrosion sévère des conduites en acier. Certains standards (ASTM304 par exemple) imposent une réglementation sur les nuances d'acier à utiliser ou sur les composés chimiques pouvant être transportés avec le CO₂ puisqu'il n'est pas rare que le poste de capture produise du CO₂ avec des impuretés dont la teneur change en fonction du type de capture utilisé. Typiquement, le CO₂ issu de la capture peut contenir des gaz incondensables (Diazote N₂,oxygène O₂, ou Argon Ar par exemple), mais aussi des oxydes d'azote NOx, du sulfure d'hydrogène H₂S, du dioxyde de soufre SO₂, du dioxyde de carbone CO, du méthane CH₄, de l'hydrogène H₂ de l'ammoniac NH₃ et de l'eau. On limite ainsi la fraction massique d'eau sous la forme de vapeur à 0.025 % pour les systèmes de captage et stockage de CO₂, car on constate que les autres impuretés gazeux tels que CO₂, les NOx, les SOx ou encore H₂, même en faibles quantités aggravent les effets corrosifs du mélange.

En fonction des impuretés des flux, différentes nuances d'acier (X65, 304L par exemple) peuvent être utilisées avec des coûts parfois très élevés. Des surépaisseurs de corrosion sont également adoptées pour les conduites, ce qui contribue à encore augmenter les prix.

Ainsi, même si le coût de fabrication et de pose de conduites en acier pour le transport de CO₂ était relativement faible dans les années 1970, face à l'augmentation des coûts des matériaux, l'utilisation de conduites en acier pour le transport de CO₂ s'avère onéreuse et peut représenter jusqu'à 20% de la chaine de captage et de stockage de CO₂ en fonction du cas étudié. Des conduites comprenant des tubes en acier sont connues des documents CN 111473167 A et CN 106287008 A.

L'objet de l'invention consiste à proposer une nouvelle technologie de conduite permettant de réduire les coûts de production et de pose tout en assurant la sécurité de l'équipement soumis à des pressions élevées (supérieure au moins à 70 bar, soit au moins 7 MPa), notamment en évitant le risque d'éclatement sous l'effet de la pression interne et en limitant les risques de corrosion.

### Résumé de l'invention

L'objectif est atteint par une conduite comprenant les caractéristiques de la revendication 1. Il s'agit d'une conduite pour le transport de gaz, notamment de dioxyde de carbone, comprenant au moins un élément tubulaire, l'élément tubulaire étant formée par une juxtaposition de couches concentriques comprenant, en allant de l'intérieur vers l'extérieur, au moins une couche d'étanchéité, une couche en béton précontraint (aussi appelée paroi comportant une couche en béton précontraint) et au moins une couche de renfort mécanique circonférentiel. De plus, le béton composant la couche en béton précontraint est choisi parmi les bétons fibrés à ultra haute performance. Ainsi, la conduite est configurée (dimensionnée) pour résister à une pression supérieure à 70 bar (7 MPa), typiquement jusqu'à des pressions permettant le transport du CO₂ à l'état supercritique (150 bar).

De préférence, le béton composant la couche en béton précontraint est choisi parmi les bétons fibrés à ultra haute performance comportant des fibres métalliques en acier et présentant une résistance en compression supérieure à 130 MPa.

Avantageusement, le béton composant la couche en béton précontraint est choisi parmi les bétons fibrés à ultra haute performance répondant à au moins un des critères suivants :
- le béton précontraint comporte des granulats de différentes tailles, la taille maximum des granulats étant inférieure à 7 mm, de préférence inférieure à 1 mm, et la teneur en granulats ayant une taille de grains d50 < 5µm étant au moins supérieure 50 kg/m³ de béton,
- une teneur en ciment comprise entre 700 et 1000 kg/m³ de béton,
- un rapport massique eau/ciment compris entre 0,15 et 0,25,
- une teneur en additifs, en extrait sec, comprise entre 10 à 35 kg/m³ de béton,
- une teneur en fibres, comprise entre 2% et 10% en volume.

Selon une configuration de l'invention, la couche de renfort mécanique circonférentiel est composée d'éléments métalliques circonférentiels disposés autour de ou dans la couche de béton précontraint, les éléments métalliques circonférentiels étant précontraint en tension. Préférentiellement, les éléments métalliques circonférentiels sont choisis parmi des fils métalliques, des bandes métalliques, des anneaux métalliques, des câbles métalliques. Selon une mise en oeuvre de l'invention, l'élément tubulaire comporte en outre une couche de protection disposée sur la surface externe de la couche en béton précontraint, la couche de renfort mécanique circonférentiel pouvant être noyée dans la couche de protection.

Selon l'invention, la couche en béton précontraint (la paroi) comporte au moins une couche de renfort mécanique axial composée d'un ou plusieurs éléments métalliques longitudinaux disposés dans la couche de béton précontraint, ledit un ou plusieurs éléments métalliques longitudinaux étant précontraint en tension.

Avantageusement, ledit un ou plusieurs éléments métalliques longitudinaux est choisi parmi un tube métallique, des fils métalliques, des câbles métalliques ou des bandes métalliques.

Selon un mode de réalisation de l'invention, ladite couche d'étanchéité est choisie parmi une couche en métal, notamment en acier, une couche en polymère, notamment en polytetrafluoroéthylène, ou d'une juxtaposition d'une sous-couche interne en béton et d'une sous-couche externe en métal, notamment en acier, ou en polymère, notamment en polytetrafluoroéthylène.

De manière préférée, la conduite comprend une pluralité d'éléments tubulaires, chaque élément tubulaire comprenant un emboîtement mâle ou un emboîtement femelle à chaque extrémité longitudinale de l'élément tubulaire, de manière à pouvoir assembler deux éléments tubulaires l'un avec l'autre, l'emboîtement mâle ou l'emboîtement femelle comprenant un moyen d'étanchéité.

Selon une configuration de l'invention, l'élément tubulaire comprend une couche d'isolation thermique positionnée contre la surface interne de la couche d'étanchéité.

De manière préférée, la couche d'isolation thermique est en béton cellulaire.

### Liste des figures

D'autres caractéristiques et avantages du dispositif selon l'invention, apparaîtront à la lecture de la description ci-après d'exemples non limitatifs de réalisations, en se référant aux figures annexées et décrites ci-après.
La figure 1 illustre schématiquement une conduite de transport de gaz sous pression selon un mode de réalisation de l'invention.
La figure 2 illustre la section courante d'un élément tubulaire selon un premier mode de réalisation de l'invention.
La figure 3 illustre la section courante d'un élément tubulaire selon un deuxième mode de réalisation de l'invention.
La figure 4 illustre la section courante d'un élément tubulaire selon un troisième mode de réalisation de l'invention.
La figure 5 représente les résultats de simulations numériques du comportement d'un élément tubulaire sous pression interne avec une couche en béton ordinaire selon l'art antérieur.
La figure 6 représente les résultats de simulations numériques du comportement d'un élément tubulaire sous pression interne en béton fibré à ultra hautes performances selon l'invention.
La figure 7 représente un exemple d'assemblage par des emboîtements mâles et femelles aux extrémités des éléments tubulaires selon l'invention.

### Description des modes de réalisation

L'invention concerne une conduite pour le transport de gaz, notamment de dioxyde de carbone CO₂, comprenant au moins un élément tubulaire, de préférence avec plusieurs éléments tubulaires assemblés les uns avec les autres de manière à former une conduite de plusieurs kilomètres de longueur. L'élément tubulaire est formé par une juxtaposition de couches concentriques comprenant, en allant de l'intérieur vers l'extérieur, au moins une couche d'étanchéité, une couche en béton précontraint et au moins une couche de renfort mécanique circonférentiel qui sert à pré-contraindre le béton.

Ces couches sont dites juxtaposées et concentriques car elles sont disposées les unes autour des autres sans espace libre entre elles. En d'autres termes, le diamètre (ou la distance au centre de l'élément tubulaire dans le cas d'une section non circulaire) intérieur d'une couche externe correspond au diamètre (ou la distance au centre de l'élément tubulaire dans le cas d'une section non circulaire) extérieur d'une couche interne consécutive à la couche externe. Une couche forme une paroi continue ayant la forme de la section courante.

Le béton est un matériau avec une bien meilleure résistance mécanique en compression qu'en traction. En effet, soumis à de faibles efforts de traction, le béton a tendance à se fissurer : la contrainte maximale de résistance en traction est généralement inférieure à 5 MPa pour le béton ordinaire. La précontrainte appliquée au béton par la couche de renfort mécanique circonférentiel permet de charger initialement le béton en compression afin d'augmenter artificiellement sa résistance à la pression interne (qui génère des contraintes de traction dans le béton). Ainsi, une épaisseur de béton précontraint est à même de résister à une pression interne plus élevée que la même épaisseur du même béton sans précontrainte.

La précontrainte du béton est générée par des éléments internes métalliques qui sont mis en place au moment de couler le béton. Ces éléments internes métalliques sont maintenus en tension (en d'autres termes, on applique une tension à ces éléments internes métalliques), lors du coulage du béton et pendant toute la durée de séchage du béton. Une fois le béton sec, la tension des éléments internes métalliques est relâchée (on n'applique plus de tension). Ce relâchement des éléments internes métalliques applique une précontrainte en compression du béton.

Dans le présent texte, on appelle « pression interne » la pression absolue à l'intérieur de la conduite ou la surpression à l'intérieur de la conduite, la surpression correspondant alors à la différence entre la pression absolue à l'intérieur de la conduite et la pression absolue à l'extérieur de la conduite.

La couche d'étanchéité interne sert à empêcher le fluide interne d'être en contact directement avec le béton et/ou la couche de renfort mécanique circonférentiel. Cela est particulièrement avantageux pour prévenir le phénomène de carbonatation du béton, notamment lorsque le fluide est du CO₂ qui peut attaquer la couche de béton et/ou la couche de renfort mécanique circonférentiel. On note cependant que la carbonatation, liée à la pénétration du CO₂ dans les pores du béton, conduit à colmater partiellement les pores, ce qui contribue à réduire la porosité. Ce phénomène est quasi nul lorsque le CO₂ est déshydraté.

Par ailleurs, le béton composant la couche en béton précontraint est choisi parmi les bétons fibrés à ultra haute performance. Ainsi, la conduite est configurée pour résister à une pression supérieure à 70 bar de manière à permettre le transport de fluide (notamment de gaz) sur de longues distances de plusieurs kilomètres, de préférence de plusieurs centaines de kilomètres.

Les conduites de transport de gaz ont un diamètre externe généralement inférieur à 1.2m (de préférence strictement inférieur à 1m et de manière encore préférée inférieur à 0,8m), avec un diamètre optimum permettant de transporter un débit massique de gaz le plus important possible à des coûts les plus faibles possibles. De plus, un faible diamètre permet de limiter l'épaisseur de conduite nécessaire à la résistance à la pression interne, et donc de réduire le coût de fabrication. De ce fait, le ou les éléments tubulaires de la conduite ont un diamètre externe inférieur à 1m, de préférence, inférieur à 0,8m.

Par béton, on entend un mélange comprenant des granulats (aussi appelé « graviers » ou « gravillons »), du sable, du ciment et de l'eau. Il peut également contenir des adjuvants et des additifs et/ou des fibres. Les propriétés du béton se développent par hydratation.

Par mortier, on entend un mélange comprenant du sable, de l'eau et du ciment. Contrairement au béton, il ne comporte pas de granulats (graviers). Il peut également contenir des adjuvants, des additifs et/ou des fibres. Les propriétés du mortier se développent par hydratation, comme pour le béton.

Par béton fibré ultra haute performance, on entend un béton renforcé par des fibres qui peuvent être des fibres métalliques et/ou polymères et présentant une résistance à la compression supérieure à 130 MPa, de préférence proche de 150 MPa.

Par opposition au béton fibré ultra haute performance, nous entendons par béton « classique » ou « usuel » ou « ordinaire », un béton au sens de la norme NF EN 206, présentant une résistance à la compression inférieure à 100 MPa.

Les bétons fibrés à ultra-haute performance (BFUP) mis en oeuvre par la présente invention peuvent être définis par la norme NF P18-470. Les BFUP y sont définis comme des « bétons caractérisés par une résistance à la compression élevée, supérieure à 130 MPa, au-delà du domaine d'application de la norme NF EN 206/CN:2014, par une résistance en traction post-fissuration importante permettant d'obtenir un comportement ductile en traction et dont la non-fragilité permet de calculer et de réaliser des structures et éléments de structure sans utiliser d'armatures de béton armé ». Bien entendu, les BFUP peuvent être utilisés avec des armatures de béton armé ou des armatures de précontrainte.

Plus précisément, selon un mode de réalisation de l'invention, on choisit un béton fibré à ultra-haute performance (BFUP) de classe BFUP-S au sens de la norme NF P18-470, à savoir :
- Un BFUP comportant des fibres en aciers. Ainsi, le BFUP présente des propriétés de résistance post-fissuration qui sont conférées par des fibres d'acier. Les fibres d'acier peuvent être définies comme des « éléments droits ou déformés provenant de fil étiré à froid, de tôle découpée, d'extraits de coulée, de fil étiré à froid raboté ou de blocs d'acier fraisés ». Les fibres en acier peuvent présenter des dimensions géométriques suivantes : diamètre de 0,1 à 0,3 mm et une longueur comprise entre 10 à 20 mm.
- Un BFUP présentant une résistance en compression supérieure à 150 MPa, mesurée selon la norme NF EN 12390-3:2012.

De préférence, on choisit un BFUP de classe de comportement en traction T2 (peu écrouissant), ou T3 (très écrouissant), selon la norme NF P18-470.

Selon un mode de réalisation de l'invention, on peut choisir un BFUP ayant une composition répondant aux critères suivants, pris seuls ou en combinaison :
- Le BFUP comporte des granulats de différentes tailles, la taille maximum des granulats est inférieure à 7 mm, de préférence inférieur à 1 mm. Ainsi le BFUP est caractérisé par une limite de taille supérieure pour les granulats utilisés : 7 mm de taille maximale, préférentiellement 1 mm de taille maximale.
- Une teneur en ciment (aussi appelé liant) comprise entre 700 et 1000 kg/m3 de béton, c'est-à-dire une teneur très élevée en ciment, la teneur en béton ordinaire (non BFUP) étant généralement inférieure à 400 kg/m³. De préférence, on utilise un ciment de grade 52.5 défini par la norme NF EN 197-1.
- Le BFUP comporte une teneur de particules très fines présentant une distribution de taille de grains d50 < 5µm d'au moins 50kg/m3 de béton. Ainsi, le BFUP présente un squelette granulaire optimisé sur plusieurs échelles pour favoriser la compacité de l'empilement. Les formulations s'appuient pour cela sur des additions de particules très fines (d50 < 5 µm) comme les fumées de silice, les fillers siliceux ou calcaires ultrafins.
- Un dosage en eau très faible : un rapport massique eau/ciment compris entre 0,15 et 0,25.
- Une teneur élevée en additifs, en particulier les superplastifiants : comprise entre 10 à 35 kg en extrait sec par m3 de béton.

Les superplastifiants (également appelés adjuvants) peuvent être ajoutés dans le but de modifier l'ouvrabilité du béton (ce sont des adjuvants dits « réducteurs d'eau »), de modifier la prise et le durcissement du béton, de modifier les propriétés du béton (ce sont des adjuvants hydrofuges de masse ou rétenteurs d'eau pour réduire la tendance au ressuage par exemples).

Les réducteurs d'eau sont utilisés pour diminuer la quantité d'eau présente à l'état frais du béton, ce qui permet, entre autres de réduire la porosité du béton.

Les rétenteurs d'eau peuvent être des polymères superabsorbants tels que des éthers de cellulose comme le méthylcellulose, l'hydroxyéthyl méthyl cellulose, l'hydroxypropyl méthyl cellulose et le carboxyméthylcellulose. Ils ont pour effet d'absorber une grande partie d'eau libre du béton et empêche cette eau absorbée de sortir du béton.

Les hydrofuges de masse, tels que des sels d'acides gras solubles dans l'eau, sont utilisés pour réduire l'absorption capillaire et donc la perméabilité de l'eau dans le béton. Les stéréates sont de bons hydrofuges de masse.
- Une teneur en fibres, par exemple métalliques et/ou polymères, de préférence métalliques, par exemple en acier, à des dosages élevés : entre 2% et 10% en volume.

En utilisant un BFUP de ce type, la résistance mécanique en compression du BFUP est d'au moins 130 MPa et un comportement ductile. Il est donc adapté au transport de gaz à des pressions supérieures à 70 bar.

Selon un exemple de réalisation de l'invention, on peut choisir un BFUP répondant à la composition suivante (bien entendu la composition est donnée lors de la préparation du BFUP ou autrement dit à la gâche) :
- Ciment (par exemple de classe 52.5 ou analogue) : 700 à 1000 kg/m³
- Sable fin, siliceux ou calcaire, ayant des tailles de particules < 1mm : 800 à 1200 kg/m³
- Charge minérale fine (d50 entre 10 et 50 µm), siliceux ou calcaire : 150 à 250 kg/m³
- Filler minéral ultrafin (d50 < 5 µm) ou nanométrique (par exemple choisit parmi les fumées de silice, microfiller calcaire ou siliceux) : 50 à 250 kg/m³
- Fibres qui peuvent être métalliques (acier, inox par exemples), en polymère, (du poly acétate de vinyle PVA ou du polypropylène PP par exemple), ou en verre, le diamètre des fibres étant compris entre 0,1 à 0,3 mm et la longueur comprise entre 10 à 20 mm, le pourcentage de fibres étant compris entre 2 et 10% en volume.

Lorsque les fibres sont métalliques, on parle alors de BFUP de type A. Lorsque les fibres ne sont pas métalliques (polymère, verre), on parle de BFUP de type M.
- Adjuvants plastifiants ou super-plastifiants : 10 à 35 kg/m³ (extrait sec). Pour le BFUP, on privilégie pour le choix de ces adjuvants des polycarboxylates (réducteur d'eau), des polyacrylates (polymère superabsorbant), des dérivés de naphtalène (réducteur d'eau), et/ou des mélanines sulfonés (réducteur d'eau).
- Eau totale : entre 15 et 25 % en masse de la quantité de ciment. Il est à noter que le faible rapport eau/ciment permet de réduire drastiquement la porosité, réduisant par conséquent le phénomène de carbonatation du béton.

De plus, il peut préférentiellement être ajouté des hydrofuges de masse, comme des acides gras solubles dans l'eau tels que des stéarates qui permettent de diminuer l'absorption capillaire et donc d'obtenir une très faible porosité, limitant ainsi encore les attaques possibles du CO₂.

Les compositions 1 et 2 sont données à titre d'exemple non limitatif :

**[Table 1]**

| | Composition 1 | Composition 2 |
|---|---|---|
| Ciment 52.5R | 750 kg | 1 075 kg |
| Sable fin | 1 020 kg | 1 050 kg |
| Quartz broyé | 200 kg | 160 kg |
| Fumée de silice | 230 kg | 50 kg |
| Fibres métalliques | 160 kg | 220 kg |
| Superplastifiant (extrait sec) | 10 kg | 35 kg |
| Eau | 140 L | 200 L |

L'utilisation du béton fibré ultra haute performance (BFUP) permet d'augmenter le niveau de précontrainte du béton ce qui permet d'augmenter la pression interne à laquelle il peut résister ou de réduire l'épaisseur de béton. Toutefois, le dimensionnement mécanique ne suffit pas pour permettre à la conduite de transporter de gaz sous pression en toute sécurité puisqu'un comportement fragile impliquerait des risques élevés pour la sécurité des personnes et de l'environnement.

Contrairement au béton usuel (non BFUP), le BFUP comporte un comportement ductile et non un comportement purement fragile. Le BFUP n'est donc fragile ni en compression, ni en flexion, ce qui offre un comportement plus sécuritaire en cas de chargement accidentel. En d'autres termes, le choix du béton BFUP permet d'augmenter la résilience de l'élément tubulaire selon l'invention. En effet, la couche en béton BFUP présente une capacité à se déformer jusqu'à créer des fissures qui laissent fuir le gaz sous pression, mais sans exploser. En effet, les fibres, ainsi que la composition du béton BFUP autorise une déformation du béton jusqu'à l'apparition de fissures, sans ruine de la structure car les fibres maintiennent la structure et ses capacités de résistance mécanique même après l'apparition de fissures. Cette particularité permet à la conduite de ne pas exploser en permettant des déformations. C'est grâce à cette particularité que la conduite en BFUP peut être utilisée pour transporter des gaz à une pression interne supérieure à 70 bar (soit 7MPa) en toute sécurité.

Par ailleurs, le choix d'un béton BFUP pour réaliser la couche de béton précontraint permet d'améliorer le maintien dans le temps de la tenue mécanique de la conduite selon l'invention. En effet, les bétons BFUP présentent une excellente résistance à la fatigue et au fluage, par rapport au béton ordinaire, ce qui est bien adapté à supporter des contraintes mécaniques importantes, de manière cyclique et éventuellement accompagnées de variations de température.

Selon un mode de réalisation, la couche de béton précontraint peut également assurer une fonction d'étanchéité. En effet, le choix du béton BFUP pour réaliser la conduite selon l'invention présente une perméabilité largement inférieure (de l'ordre de cent fois inférieure) à celle des bétons ordinaires. Ainsi, la couche en béton précontraint en BFUP peut être satisfaisante pour assurer une étanchéité partielle au gaz contenu dans la conduite. L'utilisation d'un adjuvant réducteur d'eau permet de réduire la porosité. Ainsi, les capacités d'étanchéité de la couche en béton précontraint BFUP autorise la possibilité d'une défaillance ou une dégradation partielle de la couche d'étanchéité et permet de limiter les opérations de remise en état de celle-ci.

Du fait de ses propriétés mécaniques élevées, l'utilisation de béton BFUP permet d'envisager des parois relativement fines pour la conduite (de l'ordre de 4 fois plus fines selon certaines estimations). Compte tenu du coût élevé du matériau, c'est un point important pour la viabilité économique de l'invention. Cette question prend un tour particulièrement critique dans le cas où la défaillance de la couche d'étanchéité est envisagée. Dans ce cas, le gaz sous pression contenu dans la conduite envahit la porosité du béton, ce qui entraîne des contraintes de traction d'origine poromécanique susceptibles d'endommager le matériau. Ce type de défaut est instable et est susceptible d'engendrer la rupture brutale de l'enveloppe. Si l'intégrité de la couche d'étanchéité ne peut être garantie à 100% (un cas de figure probable compte tenu des niveaux de risque associés à ce type de conduite), il convient de dimensionner la précontrainte exercée sur le béton de manière à garantir que le matériau ne soit jamais soumis à des efforts de traction, même dans le cas où la couche d'étanchéité est compromise. Avec un béton ordinaire, ce critère se révèle particulièrement contraignant, engendrant des surdimensionnements en termes d'épaisseur de béton et de section de câbles de précontrainte extrêmement importants, de l'ordre de 60% en épaisseur selon certaines estimations. Le surdimensionnement est beaucoup plus réduit lorsque l'on utilise un BFUP (de l'ordre de 20 % en épaisseur), du fait de la plus grande résistance en compression du matériau qui le rend plus à même de supporter des précontraintes importantes.

De préférence, le béton composant la couche en béton précontraint peut être choisi parmi les bétons fibrés à ultra haute performance comportant des fibres métalliques en acier et présentant une résistance en compression supérieure à 130 MPa, de préférence proche de 150 MPa.

Avantageusement, le béton composant la couche en béton précontraint peut être choisi parmi les bétons fibrés à ultra haute performance comportant des fibres métalliques en acier et présentant un comportement en traction défini comme au moins faiblement écrouissant au sens de la NF P18-470 (classe T2), préférentiellement défini comme fortement écrouissant au sens de la NF P18-470 (classe T3).

La section des éléments tubulaires peut être de toute forme, notamment circulaire ou polygonale, par exemple octogonale. L'intérieur de l'élément tubulaire délimite la zone où le fluide sous pression peut circuler pour être transporté d'un premier emplacement à un deuxième emplacement, à distance du premier emplacement.

Avantageusement, la conduite peut s'étendre sur plusieurs kilomètres, par exemple par un assemblage bout à bout des différents éléments tubulaires.

Préférentiellement, la couche en béton précontraint peut être choisi parmi les bétons fibrés à ultra haute performance répondant à au moins un des critères suivants :
- le béton précontraint comporte des granulats de différentes tailles, la taille maximum des granulats étant inférieure à 7 mm, de préférence inférieure à 1 mm, et la teneur en granulats ayant une taille de grains d50 < 5µm étant au moins supérieure 50 kg/m³ de béton.

Avantageusement, le taux de fibres du BFUP peut être compris entre 50 et 250 kg/m³, de préférence entre 150 et 240 kg/m³. De ce fait, le comportement ductile est amélioré.

Selon une variante de l'invention, la couche de renfort mécanique circonférentiel peut être composée d'éléments métalliques circonférentiels disposés autour de ou dans la couche de béton précontraint, les éléments métalliques circonférentiels étant précontraints en tension. Ainsi, les éléments métalliques ont une résistance en traction supérieure à 150 MPa, ce qui permet d'assurer la précontrainte au béton. Pour assurer la précontrainte, les éléments métalliques sont mis en traction pendant le séchage du béton. Ainsi, après le séchage du béton, l'effort de traction des éléments métalliques est arrêté et le béton est alors sous précontrainte de compression.

De préférence, les éléments métalliques circonférentiels peuvent être choisis parmi des fils métalliques, des bandes métalliques, des anneaux métalliques, des câbles métalliques. De ce fait, ces différents éléments peuvent être enroulés autour de la couche de béton ou dans la couche de béton. L'enroulement des éléments métalliques facilite la génération de la précontrainte du béton.

Selon un mode de mise en oeuvre de l'invention, la précontrainte en traction circonférentielle peut être obtenue par un enroulement sous tension d'éléments métalliques circonférentiels autour du tube de béton, par exemple un enroulement de fils, de câbles ou de bandes métalliques. Selon un autre mode de réalisation, les éléments métalliques circonférentiels sont emmanchés dans des gaines réservées dans le tube de béton lors du coulage de celui-ci, précontraints, puis rendus solidaires du tube de béton par l'injection d'un coulis de ciment qui vient remplir l'espace laissé libre dans la gaine béton. De préférence, les éléments métalliques circonférentiels sont disposés à la périphérie, c'est-à-dire autour et au contact, de la couche de béton précontraint.

Alternativement, les éléments métalliques circonférentiels peuvent être noyés dans la couche de béton précontraint. Dans ce cas, les éléments métalliques circonférentiels sont disposés de préférence dans la moitié (la moitié est définie par la partie obtenue en délimitant le tube formée par la couche en béton précontraint en deux moitiés correspondant à deux tubes concentriques, superposés et d'épaisseur égale) de la couche en béton précontraint située vers l'extérieur de la conduite.

De manière avantageuse, les éléments métalliques circonférentiels peuvent être régulièrement répartis dans ou sur la couche en béton, pour appliquer une précontrainte homogène sur la couche de béton.

Selon une configuration de l'invention, l'élément tubulaire peut comporter une couche de protection disposée sur la surface externe de la couche en béton précontraint lorsque la couche de renfort circonférentiel est noyée dans la couche de protection, ou de la couche de renfort mécanique circonférentiel lorsque celle-ci est positionnée sur la surface externe de la couche en béton précontraint. La couche de protection permet de protéger la couche de renfort mécanique circonférentiel des agressions physiques et/ou chimiques de l'environnement, par exemple pour éviter la corrosion liée à l'environnement externe et/ou le frottement de la couche de renfort mécanique circonférentiel.

Dans certains cas, la couche de protection peut être étanche aux fluides (liquides et/ou gaz) pour éviter l'infiltration de ces fluides dans le béton. Ainsi, on peut éviter par exemple l'infiltration de l'eau dans le béton et ainsi éviter la corrosion de la couche de renfort mécanique circonférentiel.

Avantageusement, la couche de protection peut être en béton ordinaire (non BFUP), en mortier, en asphalte ou en polymère, tel que du polyéthylène ou du polytetrafluoroéthylène.

Selon l'invention, la couche en béton précontraint (la paroi) comporte au moins une couche de renfort mécanique axial composée d'un ou plusieurs éléments métalliques longitudinaux disposés dans la couche de béton précontraint, ledit un ou plusieurs éléments métalliques longitudinaux étant précontraint en tension. De ce fait, la résistance en traction longitudinale est améliorée.

Ainsi, d'une part, la couche de renfort mécanique axial composée par ledit un ou plusieurs éléments métalliques longitudinaux a pour rôle de diminuer la contrainte axiale supportée par la couche en béton lorsque la conduite selon l'invention est sous pression élevée. D'autre part, la couche de renfort mécanique axial composée par ledit un ou plusieurs éléments métalliques circonférentiels a pour rôle de maintenir la couche en béton dans une situation de contrainte de compression sur la plus grande gamme de sollicitation de pression interne de la conduite, ce qui permet de profiter au maximum des excellentes caractéristiques de résistance à la compression du béton et donc de minimiser l'épaisseur de la couche de béton.

Les éléments métalliques peuvent être incorporées dans la paroi (la couche en béton précontraint) aisément lors de la fabrication du béton et de tels éléments sont également adaptés à être soumis à un effort de traction lors de la fabrication et du séchage du béton de manière à générer une précontrainte longitudinale, en plus de la précontrainte circonférentielle. En d'autres termes, ledit un ou plusieurs éléments métalliques longitudinaux sont noyés au sein du béton BFUP. Les éléments métalliques longitudinaux sont disposés de préférence sur ou au voisinage du plan médian de la couche en béton précontraint (le plan médian est défini comme le plan équidistant de la surface interne et de la surface externe du tube). Selon un mode de réalisation, les éléments métalliques longitudinaux sont disposés et répartis sur deux plans tubulaires dont les diamètres sont inscrits dans la couche en béton précontraint.

Ledit un ou plusieurs éléments métalliques longitudinaux sont précontraints en tension et imposent donc une précontrainte en compression dans le sens de l'axe de la conduite, dans la couche de béton précontraint au moins lorsque la conduite est au repos.

De manière avantageuse, ledit un ou plusieurs éléments métalliques longitudinaux est choisi parmi un tube métallique, des fils métalliques, des câbles métalliques ou des bandes métalliques.

De manière avantageuse, les éléments métalliques longitudinaux peuvent être régulièrement répartis dans la couche en béton, pour appliquer une précontrainte homogène sur la couche de béton.

Selon une mise en oeuvre de l'invention, la couche d'étanchéité est choisie parmi une couche en métal, notamment en acier, une couche en polymère, notamment en polytetrafluoroéthylène (aussi appelé PTFE) ou une couche en BFUP avec adjuvant de rétention d'eau pour réduire la porosité et ainsi la perméabilité au CO₂. Ces matériaux sont étanches aux fluides et notamment aux gaz tels que le CO₂. De plus, ils sont chimiquement compatibles avec les fluides internes. Lorsque la couche d'étanchéité est métallique, il peut être nécessaire de choisir judicieusement la nuance d'acier pour améliorer la durée de vie de la couche d'étanchéité avec le fluide interne. Pour se faire, on peut par exemple choisir un acier inoxydable, tel qu'un acier duplex.

La réalisation de la sous-couche en polymère permet de réduire le poids et le coût de la couche d'étanchéité, alors que la réalisation de la sous-couche en métal apporte de meilleures caractéristiques mécaniques.

Selon une variante de réalisation, la couche d'étanchéité peut être assurée par une première sous-couche formée en béton (en BFUP avec adjuvant de rétention d'eau pour réduire la porosité et ainsi la perméabilité au CO₂) suivi d'une sous-couche formée en métal, de préférence en acier. La première sous-couche en béton a pour rôle de protéger d'une part la face interne de la sous-couche formée en acier contre les dommages physiques et/ou chimiques (corrosion notamment), éviter le collapse de la même sous-couche (en raison des précontraintes appliquées aux fils en acier) et, de façon générale, résister à la contrainte induite par le fluide sous pression.

Dans un mode de réalisation particulier de l'invention, la couche de renfort mécanique axial et la couche d'étanchéité sont formées par un seul et même élément composé d'un tube en acier.

De manière particulièrement avantageuse, la conduite peut comprendre une pluralité d'éléments tubulaires, chaque élément tubulaire comprenant un emboîtement mâle ou un emboîtement femelle à chaque extrémité longitudinale de l'élément tubulaire, de manière à pouvoir assembler deux éléments tubulaires l'un avec l'autre, l'emboîtement mâle ou l'emboîtement femelle comprenant un moyen d'étanchéité. Ainsi, chaque élément tubulaire peut comprendre à une extrémité longitudinale un emboîtement mâle et à l'autre extrémité longitudinale un emboîtement femelle. Ainsi, l'assemblage des éléments entre eux est facilité et les éléments tubulaires sont tous identiques ce qui simplifie la logistique et peut réduire le coût de fabrication. Alternativement, certains éléments tubulaires peuvent comprendre aux deux extrémités longitudinales des emboîtements mâles alors que d'autres éléments tubulaires peuvent comprendre aux deux extrémités longitudinales des emboîtements femelles. Ainsi, on peut assembler successivement un élément tubulaire avec deux emboîtements mâles puis un élément tubulaire avec deux emboîtements femelles pour générer la conduite. En d'autres termes, la conduite peut être constituée d'une suite alternant un élément tubulaire avec deux emboîtements mâles et un élément tubulaire avec deux emboîtements femelles.

Selon une disposition de l'invention, l'élément tubulaire peut comprendre une couche d'isolation thermique positionnée contre la surface interne de la couche d'étanchéité. Cette couche d'isolation thermique a pour but de maintenir le fluide interne à une température compatible avec l'état souhaité du fluide. Cette couche d'isolation thermique permet notamment de maintenir le CO₂ à l'état supercritique, cet état favorisant le transport de gaz dans la conduite en limitant les pertes de charge et/ou en augmentant le débit interne à débit masse équivalent.

De préférence, la couche d'isolation thermique peut être en béton cellulaire (également appelé béton alvéolaire et plus connu sous le nom de SIPOREX^{™}). Le béton cellulaire est un béton dans lequel des bulles d'air sont occluses volontairement (par un procédé chimique ou mécanique) lors de sa fabrication, d'où le nom de béton « cellulaire » ou « alvéolaire ». Le béton cellulaire peut être fabriqué par exemple à partir de sable, de chaux et de ciment ou à partir de sable, de ciment, de poudre d'aluminium ou de pâte d'aluminium. Il est donc constitué à partir d'un mortier léger et isolant (densité : 0,4 à 1,3) en raison de la présence de nombreuses inclusions d'air ou de gaz. Ce mélange forme des cellules (ou alvéoles) d'air enfermées et séparées par de fines parois en béton.

Il peut être fabriqué en autoclave sous forme de blocs ou de panneaux et ses dimensions peuvent être ajustées par découpage avec une scie à main. Le béton cellulaire ne résistant pas bien à l'écrasement (lié à la pression interne ou externe par exemples), il est nécessaire de le positionner à l'intérieur de la conduite, c'est-à-dire en partant de l'intérieur de la conduite, avant la couche d'étanchéité. Ainsi, le béton cellulaire est soumis à une équipression, ce qui le protège de l'écrasement et ce qui est bénéfique pour réduire les pertes de charge.

Dans une configuration de l'invention, le béton fibré à ultra haute performance peut avoir une résistance à la traction supérieure à 6 MPa et/ou une porosité à l'eau inférieure à 6% et/ou une perméabilité au gaz de l'ordre de 5. 10⁻¹³ m²/s. Il peut notamment être du DUCTAL^{™}.

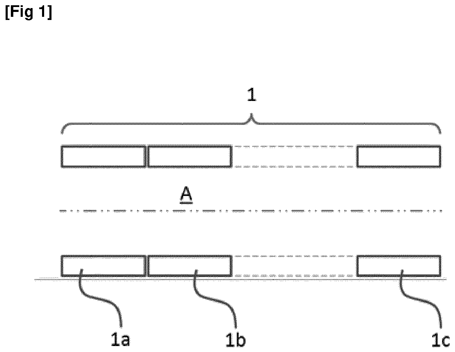

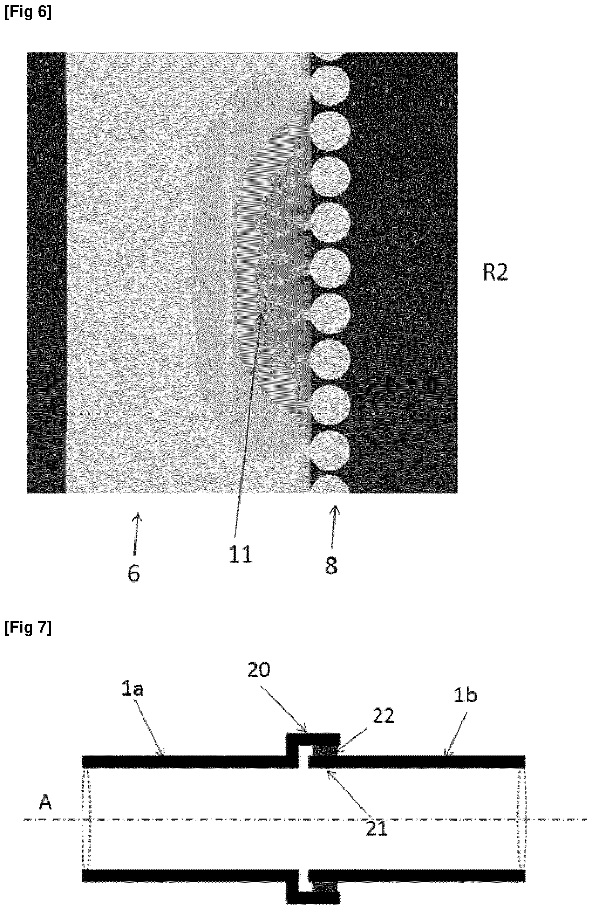

La figure 1 illustre, schématiquement et de manière non limitative, une conduite selon un mode de réalisation de l'invention. La conduite comporte une section courante 1, à l'intérieur de laquelle un fluide, tel qu'un gaz, peut circuler afin d'être transporté d'un premier emplacement à un deuxième emplacement à distance du premier emplacement. La section courante 1 a une forme tubulaire qui s'étend selon l'axe A. En référence à la figure 1, la section courante 1 de la conduite est de forme cylindrique, de section circulaire d'axe A. La section courante 1 est composée de plusieurs éléments tubulaires 1a, 1b, ... 1c. Les éléments tubulaires 1a, 1b, 1c sont assemblés bout à bout, de manière étanche, par exemple par des connexions du type de la figure 7. Aux deux extrémités longitudinales de la conduite, la section de passage de fluide est ouverte pour permettre la circulation continue du fluide. La conduite peut être disposée couchée sur un sol mais elle peut être préférentiellement partiellement ou totalement enterrée dans le sol.

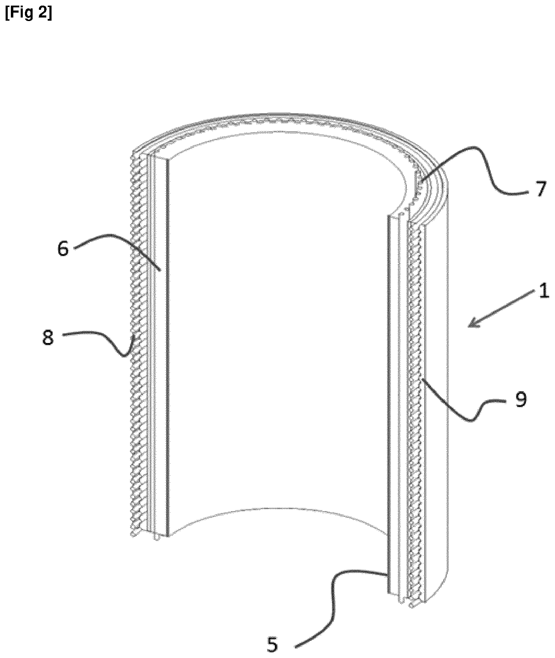

Les figures 2, 3 et 4 illustrent, schématiquement et de manière non limitative, une section courante 1 d'un élément tubulaire d'une conduite selon trois modes de réalisation de l'invention. Chacune des figures 2, 3 et 4 est une vue tridimensionnelle en coupe de la section courante 1.

En référence à la figure 2, de l'intérieur vers l'extérieur de la section courante 1, la section courante 1 de l'élément tubulaire comprend une couche d'étanchéité 5, une couche de résistance mécanique 6 en béton BFUP recouverte d'une couche de renfort mécanique circonférentiel 8, et une couche de protection 9. La couche de renfort mécanique circonférentiel 8 est composée de fils métalliques précontraints en tension et enroulés autour de la couche de résistance mécanique 6. De plus, la couche de résistance mécanique 6 peut être traversée par des fils métalliques 7 composant la couche de renfort mécanique axial.

Les fils métalliques 7 sont précontraints en tension. Les fils métalliques composant la couche de renfort mécanique circonférentiel 8 sont régulièrement répartis sur la longueur de la section courante 1, et les fils métalliques composant la couche de renfort mécanique axial 7 sont régulièrement répartis sur la circonférence de la section courante 1. La couche de protection 9, par exemple réalisée en mortier, sert notamment à la protection de la corrosion des fils métalliques précontraints de la couche 8 et à leur protection contre le frottement dans le sol ou sur le sol. La couche d'étanchéité 5 est plaquée contre la paroi (surface) interne de la couche de résistance mécanique 6. La couche d'étanchéité 5 peut être en PTFE (polytétrafluoroéthylène).

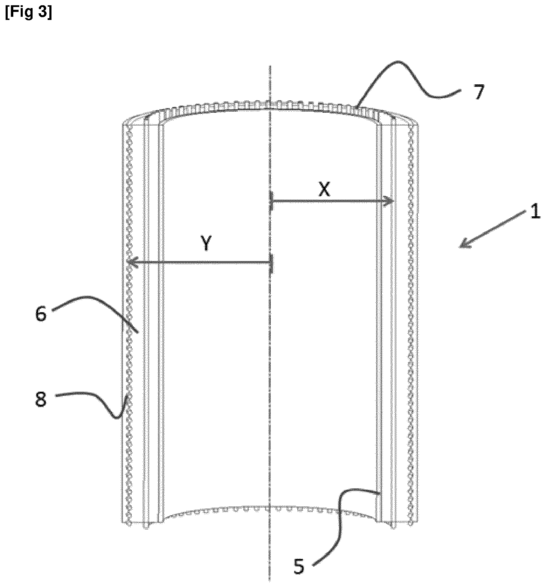

En référence à la figure 3, de l'intérieur vers l'extérieur de la section courante 1, la section courante comprend une couche d'étanchéité 5, une couche de résistance mécanique 6 en béton BFUP, une couche de renfort mécanique circonférentiel 8 disposée au sein du béton BFUP de la couche de résistance mécanique 6. De plus, la couche de résistance mécanique 6 est optionnellement traversée par des fils métalliques 7 composant la couche de renfort mécanique axial.

Les fils métalliques 7 sont précontraints en tension. Les fils métalliques 8 sont disposés dans la couche de résistance mécanique 6 à une distance Y plus grande que la distance X des fils métalliques 7 composant la couche de renfort mécanique axial lorsque ceux-ci sont utilisés, chacune des distances X et Y étant mesurées par rapport à l'axe de la conduite. Les fils métalliques composant la couche de renfort mécanique circonférentiel 8 sont régulièrement répartis sur la longueur de la section courante 1, et les fils métalliques composant la couche de résistance axial 7 sont avantageusement régulièrement répartis sur la circonférence de la section courante 1.

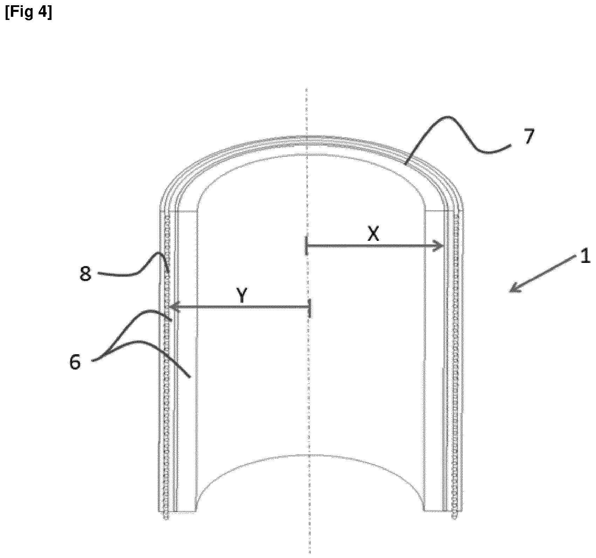

En référence à la figure 4, de l'intérieur vers l'extérieur de la section courante 1, la section courante 1 comprend une couche d'étanchéité (non représentée), une couche de résistance mécanique 6 en béton BFUP et une couche de renfort mécanique circonférentiel 8 disposée au sein du béton BFUP de la couche de résistance mécanique 6. De plus, la couche de résistance mécanique 6 est traversée par un tube métallique 7 composant la couche de renfort mécanique axial.

Le tube métallique 7 est précontraint en tension selon l'axe de la conduite. Le tube métallique 7 a un rayon de valeur X inférieur à la distance Y, distance mesurée par rapport à l'axe de la conduite, à laquelle sont disposés les fils métalliques 8 composant la couche de renfort mécanique circonférentiel. Les fils métalliques composant la couche de renfort mécanique circonférentiel 8 sont régulièrement répartis sur la longueur de la section courante 1. Dans ce mode de réalisation, le tube métallique 7 a également pour fonction d'assurer l'étanchéité de la conduite.

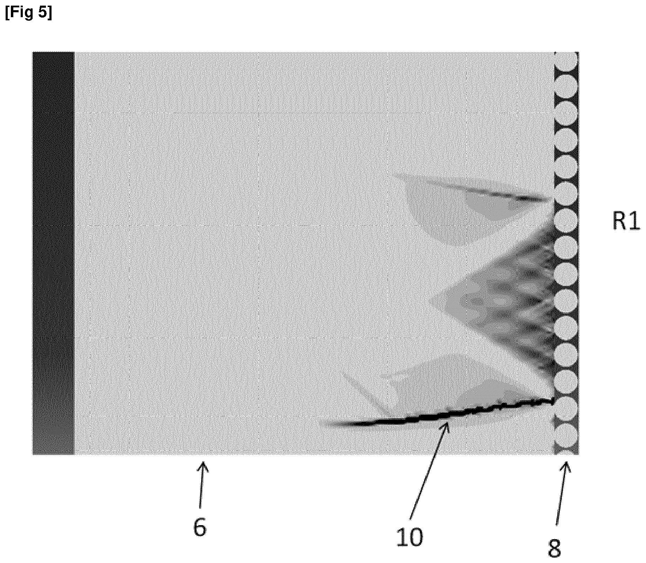

Les figures 5 et 6 comparent le comportement d'un élément tubulaire soumis à une pression interne de 125 bar (sans contre pression externe) avec une couche de résistance mécanique en béton ordinaire selon l'art antérieur et une couche de résistance mécanique en BFUP selon l'invention.

Les figures 5 et 6 présentent, respectivement pour les conduites respectivement de béton ordinaire selon l'art antérieur et de BFUP selon l'invention, une coupe dans l'épaisseur des couches de l'élément tubulaire, selon un plan longitudinal. Les figures 5 et 6 ne représentent que la couche de béton précontraint 6 ainsi que la couche de renfort mécanique circonférentiel 8 qui est composée de câbles en acier. Le côté gauche des figures 5 et 6 correspondent au centre de la conduite et le côté droit des figures 5 et 6 correspondent à l'extérieur de la conduite. Dans la couche de béton représentée par les figures 5 et 6, les champs de niveau de gris représentent la déformation plastique qui correspond à la fissuration du béton. La différence de comportement entre le béton ordinaire de la conduite et le béton BFUP de la conduite selon l'invention est immédiatement apparente. Sur la figure 5, on observe dans la couche en béton ordinaire la formation d'une fissure 10 à la frontière de la zone endommagée qui se propage vers l'intérieur de l'élément tubulaire. Cette fissure est susceptible d'engendrer une rupture et de mettre en danger l'intégrité de la structure. Sur la figure 6, on observe dans la couche du béton BFUP de la conduite de l'invention des dommages (dans la zone 11) plus limités et diffus, qui restent cantonnés à la surface extérieure de la couche en béton précontraint. De plus, le béton BFUP conserve une plus grande partie de ses capacités mécaniques sur la figure 6 par rapport à la figure 5. Par conséquent, au-delà des performances mécaniques dues au béton BFUP, l'utilisation du béton BFUP dans le cadre d'une utilisation pour une conduite de transport de fluide, notamment de gaz, permet de manière inattendue d'augmenter la résilience de la conduite. Ainsi, la conduite en béton ordinaire n'est pas adaptée au transport de gaz sous pression (jusqu'à 150 bar) alors que la conduite en BFUP selon l'invention est adaptée à une telle utilisation.

La figure 7 illustre, schématiquement et de manière non limitative, un exemple de moyen de raccordement entre des éléments tubulaires 1a, 1b d'axes A pour les assembler bout-à-bout et créer une conduite.

Afin de faciliter le raccordement entre les éléments tubulaires 1a et 1b, une extrémité longitudinale d'un élément tubulaire, ici l'élément tubulaire 1b, comprend un emboîtement mâle 21. L'emboîtement mâle 21 est ici représenté par une section de diamètre intérieur et extérieur identiques à celui de l'élément tubulaire 1b. Pour favoriser l'emboîtement et l'étanchéité, la surface du diamètre externe de l'emboîtement male 21 peut être polie de manière à éviter l'endommagement du joint d'étanchéité 22.

L'autre élément tubulaire à raccorder, ici l'élément tubulaire 1a, a une extrémité longitudinale dotée d'un emboîtement femelle 20 comprenant un épaulement.

Un joint d'étanchéité 22 est positionné entre le diamètre extérieur de l'emboîtement mâle 21 et le diamètre interne de l'emboîtement femelle 20 de manière à assurer l'étanchéité du raccordement vis-à-vis du fluide interne.

L'emboîtement mâle 21 est configuré pour s'emboîter dans l'épaulement de l'emboîtement femelle 20 assurant ainsi un assemblage bout-à-bout des éléments tubulaires 1a et 1b.

L'épaulement de l'élément femelle 20 comprend une partie d'élément cylindrique qui a un diamètre intérieur supérieur ou égal au diamètre extérieur de l'emboîtement mâle 21 et apte à la mise en place du joint d'étanchéité 22 entre l'emboîtement mâle 21 et l'emboîtement femelle 20.

## Revendications

1. Conduite pour le transport de gaz, notamment de dioxyde de carbone, comprenant au moins un élément tubulaire (1a, 1b, 1c), l'élément tubulaire (1a, 1b, 1c) étant formée par une juxtaposition de couches concentriques comprenant, en allant de l'intérieur vers l'extérieur, au moins une couche d'étanchéité (5), une couche en béton précontraint (6) et au moins une couche de renfort mécanique circonférentiel (8), le béton composant la couche en béton précontraint (6) étant choisi parmi les béton fibrés à ultra haute performance, la couche en béton précontraint (6) comportant au moins une couche de renfort mécanique axial composée d'un ou plusieurs éléments métalliques longitudinaux disposés dans la couche de béton précontraint, **caractérisé en ce que** ledit un ou plusieurs éléments métalliques longitudinaux est précontraint ou sont précontraints en tension.

2. Conduite selon la revendication 1, pour laquelle le béton composant la couche en béton précontraint (6) est choisi parmi les bétons fibrés à ultra haute performance comportant des fibres métalliques en acier et présentant une résistance en compression supérieure à 130 MPa.

3. Conduite selon l'une des revendications précédentes, pour laquelle le béton composant la couche en béton précontraint (6) est choisi parmi les bétons fibrés à ultra haute performance répondant à au moins un des critères suivants :
- le béton précontraint comporte des granulats de différentes tailles, la taille maximum des granulats étant inférieure à 7 mm, de préférence inférieure à 1 mm, et la teneur en granulats ayant une taille de grains d50 < 5µm étant au moins supérieure 50 kg/m³ de béton,
- une teneur en ciment comprise entre 700 et 1000 kg/m³ de béton,
- un rapport massique eau/ciment compris entre 0,15 et 0,25,
- une teneur en additifs, en extrait sec, comprise entre 10 à 35 kg/m³ de béton,
- une teneur en fibres, comprise entre 2% et 10% en volume.

4. Conduite selon l'une des revendications précédentes, pour laquelle la couche de renfort mécanique circonférentiel (8) est composée d'éléments métalliques circonférentiels disposés autour de ou dans la couche de béton précontraint (6), les éléments métalliques circonférentiels étant précontraints en tension.

5. Conduite selon la revendication 4, dans lequel les éléments métalliques circonférentiels sont choisis parmi des fils métalliques, des bandes métalliques, des anneaux métalliques, des câbles métalliques.

6. Conduite selon l'une des revendications précédentes, pour laquelle l'élément tubulaire (1a, 1b, 1c) comporte en outre une couche de protection (9) disposée sur la surface externe de la couche en béton précontraint (6), la couche de renfort mécanique circonférentiel (8) pouvant être noyée dans la couche de protection (9).

7. Conduite selon l'une des revendications précédentes, pour laquelle ledit un ou plusieurs éléments métalliques longitudinaux est choisi parmi un tube métallique, des fils métalliques (7), des câbles métalliques ou des bandes métalliques.

8. Conduite selon l'une des revendications précédentes, pour laquelle ladite couche d'étanchéité (5) est choisie parmi une couche en métal, notamment en acier, une couche en polymère, notamment en polytetrafluoroéthylène, ou d'une juxtaposition d'une sous-couche interne en béton et d'une sous-couche externe en métal, notamment en acier, ou en polymère, notamment en polytetrafluoroéthylène.

9. Conduite selon l'une des revendications précédentes comprenant une pluralité d'éléments tubulaires (1a, 1b, 1c), chaque élément tubulaire (1a, 1b, 1c) comprenant un emboîtement mâle (21) ou un emboîtement femelle (20) à chaque extrémité longitudinale de l'élément tubulaire (1a, 1b, 1c), de manière à pouvoir assembler deux éléments tubulaires (1a, 1b, 1c) l'un avec l'autre, l'emboîtement mâle (20) ou l'emboîtement femelle (21) comprenant un moyen d'étanchéité (22).

10. Conduite selon l'une des revendications précédentes, pour laquelle l'élément tubulaire (1a, 1b, 1c) comprend une couche d'isolation thermique positionnée contre la surface interne de la couche d'étanchéité (5).

11. Conduite selon la revendication 10, pour laquelle la couche d'isolation thermique est en béton cellulaire.

## Patentansprüche

1. Leitung für den Transport von Gas, insbesondere von Kohlendioxid, umfassend mindestens ein röhrenförmiges Element (1a, 1b, 1c), wobei das röhrenförmige Element (1a, 1b, 1c) durch eine Aneinanderreihung von konzentrischen Schichten gebildet wird, umfassend, von innen nach außen, mindestens eine Dichtungsschicht (5), eine Schicht aus vorgespanntem Beton (6) und mindestens eine umfängliche mechanische Aussteifungsschicht (8), wobei der Beton, aus dem die Schicht aus vorgespanntem Beton (6) besteht, unter den Ultrahochleistungsfaserbetonen ausgewählt ist, wobei die Schicht aus vorgespanntem Beton (6) mindestens eine axiale mechanische Aussteifungsschicht beinhaltet, die aus einem oder mehreren längs verlaufenden metallischen Elementen besteht, die in der Schicht aus vorgespanntem Beton angeordnet sind, **dadurch gekennzeichnet, dass** das eine oder mehrere längs verlaufende metallische Element(e) auf Zug vorgespannt ist oder sind.

2. Leitung nach Anspruch 1, bei welcher der Beton, aus dem die Schicht aus vorgespanntem Beton (6) besteht, aus den Ultrahochleistungsfaserbetonen ausgewählt ist, die metallische Fasern aus Stahl beinhalten und eine Druckfestigkeit von mehr als 130 MPa aufweisen.

3. Leitung nach einem der vorhergehenden Ansprüche, bei welcher der Beton, aus dem die Schicht aus vorgespanntem Beton (6) besteht, aus den Ultrahochleistungsfaserbetonen ausgewählt ist, die mindestens eines der folgenden Kriterien erfüllen:
- der vorgespannte Beton beinhaltet Zuschläge verschiedener Größen, wobei die maximale Größe der Zuschläge kleiner als 7 mm, vorzugsweise kleiner als 1 mm ist und der Gehalt an Zuschlägen mit einer Korngröße d50 < 5 µm mindestens größer als 50 kg/m³ Beton ist,
- einen Gehalt an Zement zwischen 700 und 1000 kg/m³ Beton,
- einen Wasser/Zement-Wert zwischen 0,15 und 0,25,
- einen Gehalt an Zusatzstoffen, als Trockenextrakt, zwischen 10 und 35 kg/m³ Beton,
- einen Gehalt an Fasern zwischen 2 und 10 Volumen-%.

4. Leitung nach einem der vorhergehenden Ansprüche, bei der die umfängliche mechanische Aussteifungsschicht (8) aus umfänglichen metallischen Elementen besteht, die um die oder in der Schicht aus vorgespanntem Beton (6) angeordnet sind, wobei die umfänglichen metallischen Elemente auf Zug vorgespannt sind.

5. Leitung nach Anspruch 4, bei der die umfänglichen metallischen Elemente aus metallischen Drähten, metallischen Bändern, metallischen Ringen, metallischen Seilen ausgewählt sind.

6. Leitung nach einem der vorhergehenden Ansprüche, bei der das röhrenförmige Element (1a, 1b, 1c) ferner eine Schutzschicht (9) beinhaltet, die auf der Außenfläche der Schicht aus vorgespanntem Beton (6) angeordnet ist, wobei die umfängliche mechanische Aussteifungsschicht (8) in die Schutzschicht (9) eingebettet sein kann.

7. Leitung nach einem der vorhergehenden Ansprüche, bei der das eine oder mehrere längs verlaufende metallische Element(e) unter einem metallische Rohr, metallischen Drähten (7) metallischen Seilen oder metallischen Bändern ausgewählt ist(sind).

8. Leitung nach einem der vorhergehenden Ansprüche, bei welcher die Dichtungsschicht (5) aus einer Schicht aus Metall, insbesondere aus Stahl, einer Schicht aus Polymer, insbesondere aus Polytetrafluorethylen, oder einer Aneinanderreihung aus einer inneren Teilschicht aus Beton und einer äußeren Teilschicht aus Metall, insbesondere aus Stahl, oder aus Polymer, insbesondere aus Polytetrafluorethylen, ausgewählt ist.

9. Leitung nach einem der vorhergehenden Ansprüche, umfassend eine Vielzahl von röhrenförmigen Elementen (1a, 1b, 1c), wobei jedes röhrenförmige Element (1a, 1b, 1c) ein Steckteil (21) oder ein Muffenteil (20) an jedem Längsende des röhrenförmigen Elements (1a, 1b, 1c) umfasst, so dass zwei röhrenförmige Elemente (1a, 1b, 1c) miteinander verbunden werden können, wobei das Steckteil (20) oder das Muffenteil (21) ein Dichtungsmittel (22) umfasst.

10. Leitung nach einem der vorhergehenden Ansprüche, bei der das röhrenförmige Element (1a, 1b, 1c) eine Wärmedämmschicht umfasst, die an der Innenfläche der Abdichtungsschicht (5) positioniert ist.

11. Leitung nach Anspruch 10, bei der die Wärmedämmschicht aus Porenbeton ist.

## Claims

1. Pipe for transporting gas, in particular carbon dioxide, comprising at least one tubular element (1a, 1b, 1c), the tubular element (1a, 1b, 1c) being formed by a juxtaposition of concentric layers comprising, working from the inside towards the outside, at least one sealing layer (5), a layer of prestressed concrete (6) and at least one circumferential mechanical reinforcing layer (8), the concrete that makes up the layer of prestressed concrete (6) being chosen from ultra-high performance fibre-reinforced concretes, the layer of prestressed concrete (6) having at least one axial mechanical reinforcing layer made up of one or more longitudinal metal elements disposed in the layer of prestressed concrete, **characterized in that** said one or more longitudinal metal elements is or are under tensile prestress.

2. Pipe according to Claim 1, wherein the concrete that makes up the layer of prestressed concrete (6) is chosen from ultra-high performance fibre-reinforced concretes having metal fibres made of steel and exhibiting a compressive strength greater than 130 MPa.

3. Pipe according to one of the preceding claims, wherein the concrete that makes up the layer of prestressed concrete (6) is chosen from ultra-high performance fibre-reinforced concretes that meet at least one of the following criteria:
- the prestressed concrete has aggregates of different sizes, the maximum size of the aggregates being less than 7 mm, preferably less than 1 mm, and the content of aggregates having a grain size d50 < 5 µm being at least greater than 50 kg/m³ of concrete,
- a content of cement of between 700 and 1000 kg/m³ of concrete,
- a water/cement mass ratio of between 0.15 and 0.25,
- a content of additives, in the form of solids, of between 10 and 35 kg/m³ of concrete,
- a content of fibres of between 2% and 10% by volume.

4. Pipe according to one of the preceding claims, wherein the circumferential mechanical reinforcing layer (8) is made up of circumferential metal elements disposed around or in the layer of prestressed concrete (6), the circumferential metal elements being under tensile prestress.

5. Pipe according to Claim 4, wherein the circumferential metal elements are chosen from metal wires, metal bands, metal rings, metal cables.

6. Pipe according to one of the preceding claims, wherein the tubular element (1a, 1b, 1c) also has a protective layer (9) disposed on the external surface of the layer of prestressed concrete (6), the circumferential mechanical reinforcing layer (8) being able to be embedded in the protective layer (9).

7. Pipe according to one of the preceding claims, wherein said one or more longitudinal metal elements are chosen from a metal tube, metal wires (7), metal cables or metal bands.

8. Pipe according to one of the preceding claims, wherein said sealing layer (5) is chosen from a layer of metal, in particular of steel, a layer of polymer, in particular of polytetrafluoroethylene, or a juxtaposition of an internal sublayer of concrete and an external sublayer of metal, in particular of steel, or of polymer, in particular of polytetrafluoroethylene.

9. Pipe according to one of the preceding claims, comprising a plurality of tubular elements (1a, 1b, 1c), each tubular element (1a, 1b, 1c) comprising a male fitting end (21) or a female fitting end (20) at each longitudinal end of the tubular element (1a, 1b, 1c), so as to be able to assemble two tubular elements (1a, 1b, 1c) with one another, the male fitting end (20) or the female fitting end (21) comprising a sealing means (22).

10. Pipe according to one of the preceding claims, wherein the tubular element (1a, 1b, 1c) comprises a thermal insulation layer positioned against the internal surface of the sealing layer (5).

11. Pipe according to Claim 10, wherein the thermal insulation layer is made of cellular concrete.
